# EUROPEAN PATENT APPLICATION

(11) **EP 0 620 055 A1**
(43) Date of publication of application: **19.10.1994**
(21) Application number: 94301803.6
(22) Date of filing: 14.03.1994
(51) Int. Cl.: B09B 3/00

(54) **Apparatus and method for in-situ treatment of contaminated soil**

(30) Priority: 12.03.1993 US 31212
(71) Applicant: MILLGARD ENVIRONMENTAL CORPORATION, Livonia, MI 48151 (US)
(72) Inventor: Millgard, Dennis V., Orchard Lake, Michigan 48323 (US)
(74) Representative: Allen, William Guy Fairfax

(57) **Abstract**

Dynamic air sparging soil decontamination system employing self-propelled crane (33) with Kelly bar (12) driven ten foot diameter soil agitating drill (14), compressed air delivery through the Kelly bar (12) to the agitated soil, shroud (15) for collecting volatile contaminant at the site surface released from the agitated soil by the compressed air, conducting the volatile contaminant through a HEPA carbon filter system (24) and air compressor (28) mounted as a counterweight on a platform extension (32) of the crane (33) for removing the contaminants and recirculating compressed air to the agitated soil.

## Description

Crane-mounted drill and method for in-situ treatment of contaminated soil is disclosed in U.S. Patent 5,135,058, which includes the basic drilling and fluid supply means of the present invention, but without the specific processing application and decontaminating apparatus which has been found to be highly effective for a high percentage of contaminated sites.

U.S. Patent 4,834,194 entitled Method and Apparatus for Detection of Volatile Soil Contaminants In-Situ relates to methods and apparatus for agitating and heating a subsurface volume of soil to liberate volatile compositions therefrom that are transmitted from a special flow passage created through the soil to the soil surface where they are analyzed to determine the presence or absence of selected contaminants. Treatment for the released volatile compositions depends upon the data obtained concerning soil contamination and, as generally stated, may consist of any combination of steps including the injection of additional hot air or steam for stripping of volatile contaminants, injection of treatment chemicals or biological treatment media etc.

The method and apparatus of the present invention is directed specifically to the method of in-situ drilling, agitating, mixing and injecting high pressure air into a contaminated soil site to release volatiles into a shroud at the top of the drilling site, thereupon conducting the volatile contaminants through an activated carbon bed and HEPA filter system capable of removing up to 99.8% of the contaminants from which discharged air may be recirculated to a compressor intake for recycling in the drilled earth contaminated site, or otherwise released.

Conventional counterweights of a mobile drill crane are removed and replaced with air compressor and filter apparatus of comparable weight to provide an integral mobile system.

The present invention will be more clearly understood from the following description, given by way of example only, with reference to the accompanying drawings in which:
Fig. 1 is side elevation of a prior art crane such as disclosed in said '058 Patent;
Fig. 2 is an end elevation of the prior art crane illustrated in Fig. 1 including typical auxilliary apparatus;
Fig. 3 is a perspective view of a prior art compressor having a capacity comparable to that employed in the present system;
Fig. 4 is a fragmentary schematic side elevation of the mobile crane rig of the present invention at an in-situ treatment site; and
Fig. 5 is a fragmentary.schematic plan view of the crane rig illustrated in Fig. 4.

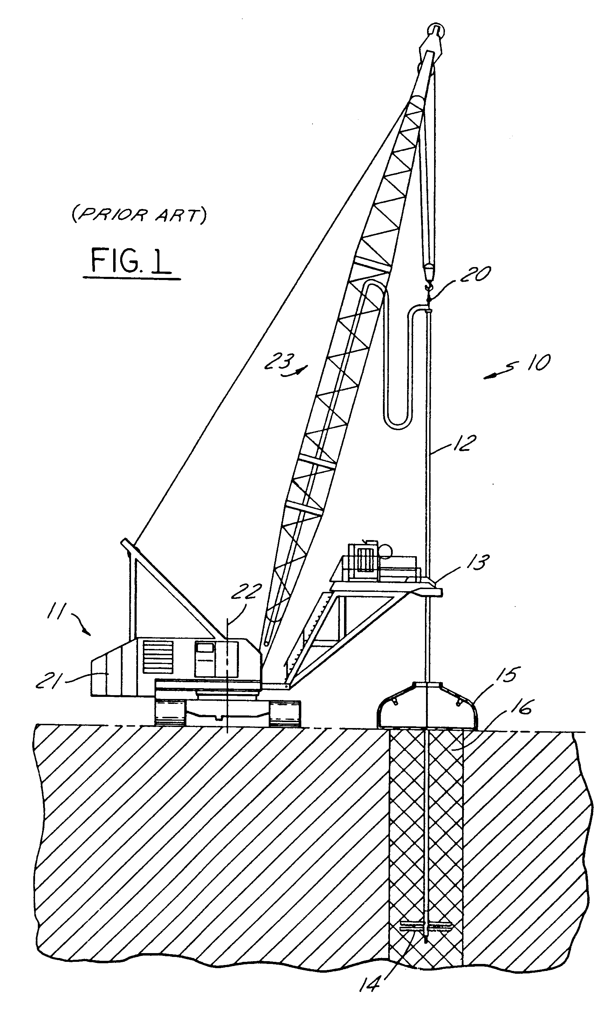

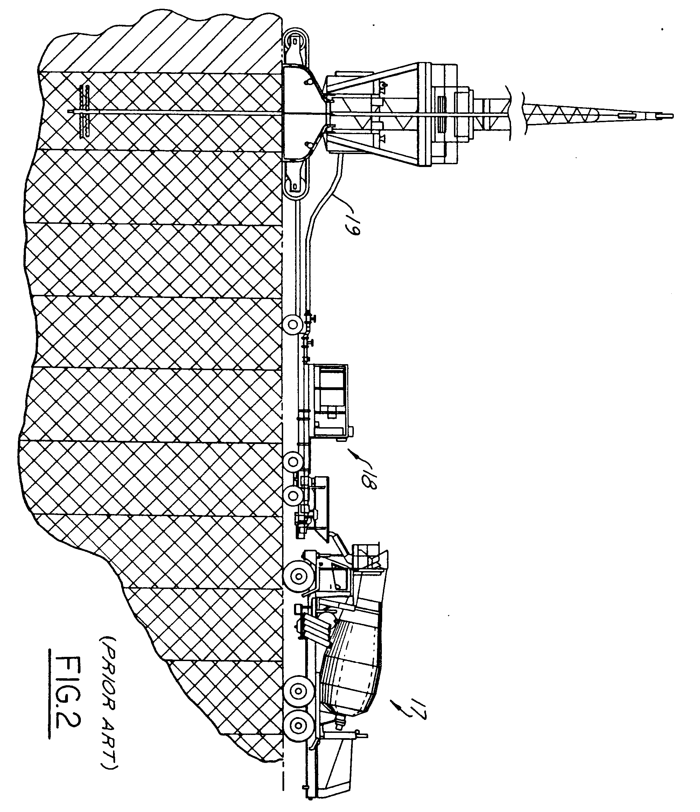

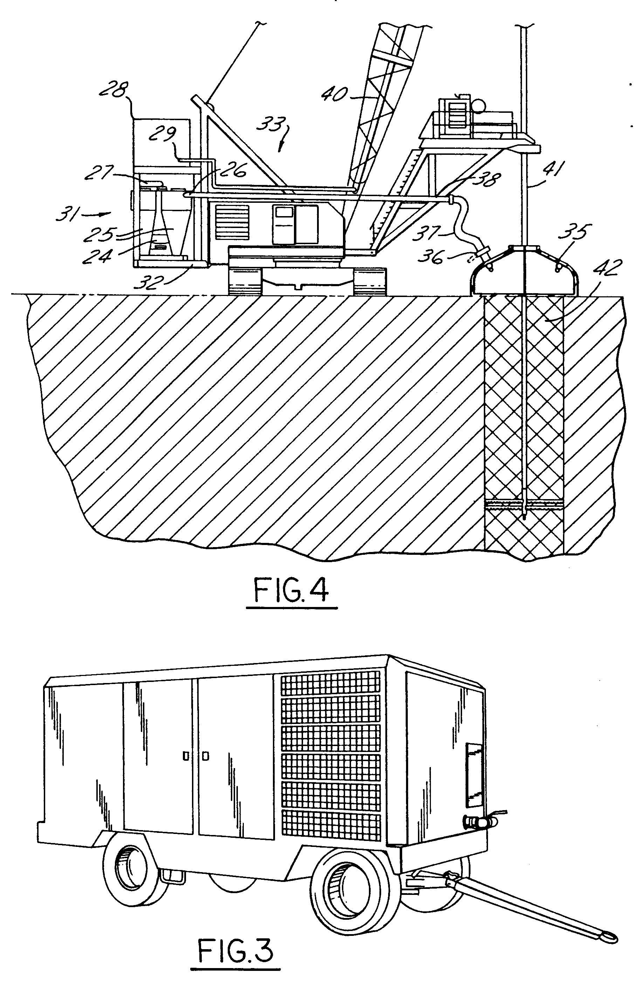

Referring to Figs. 1 and 2, prior art crane rig 10 comprises crane 11 equipped with Kelly bar 12, rotary attachment platform 13, drill bit 14, shroud 15 over contaminated treatment site 16, mixer truck 17, pump trailer 18, boom hose 19, and Kelly swivel 20. Counterweights 21 balance crane 11 relative to turning axis 22 to approximate the overcenter weight of boom 23, Kelly bar 12 and platform 13. A supply of compressed air, steam, grout, slurries of sand or cement etc., are fed by pumps in trailer 18 through boom hose 19 for injection through Kelly bar 12 into the contaminated ground site 16. Pump equipment having a capacity for practicing the present invention is shown in the Fig. 3 perspective view of portable compressor trailer equipment.

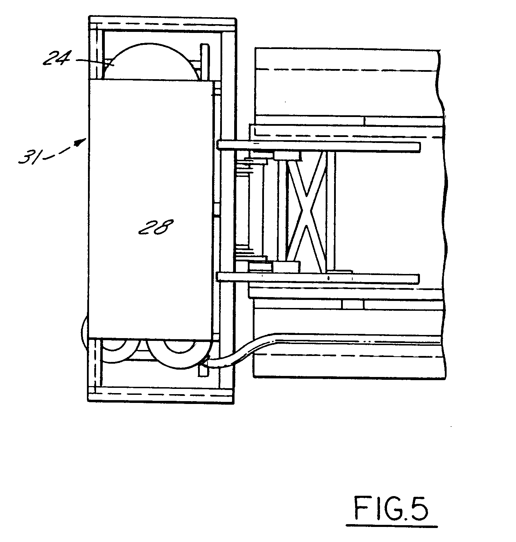

With reference to Figs. 4 and 5, dynamic air sparging system 31, available from a commercial source, is employed in the present invention which includes two activated carbon filter tanks and HEPA filters 24, a pair of liquid phase vessels 25, a vertical standing soil vac and heat exchanger, not shown, having a total system weight in the order of twenty thousand pounds. An inlet 26 is provided for vapor extracted from the soil, and an outlet 27 for discharge to compressor 28. The vapor extraction system would normally be mounted onto a trailer platform such as shown at 30 in Fig. 2 of the prior art 5,135,058 Patent. However, with reference to Figs. 4 and 5, a feature of the present invention is to mount air compressor 28, having a weight of approximately fourteen thousand five hundred pounds, comparable to that illustrated in Fig. 3, together with vapor extraction system 31, on a rear platform extension 32 of crane 33 in place of counterweights 21, such as employed in the prior art crane shown in Fig.1.

Contaminated vapor extracted from ground site 34 into shroud 35 passes through solids filter 36, flexible hose 37, rigid pipe 38 into inlet 26 for one of the liquid phase vessels 25 and from discharge outlet 27 to compressor 28. Discharge hose 29 from compressor 28 provides for recirculation of filtered air to boom hose 40 and inlet to the Kelly bar passage 41.

Dynamic air sparging and venting of a contaminated site 42, which may typically entrain gasoline, oil and related contaminants, effectively releases contaminant vapors. As a typical but not limiting example, vigorous drilling to a depth, such as twenty feet with a ten foot diameter drill bit, while pumping air at a rate of sixteen hundred cubic feet per minute at a pressure in the order of one hundred to one hundred twenty-five psi, has been found to effectively vaporize the contaminant releasing it to the shroud, where it is drawn through the carbon filter system capable of filtering up to two thousand cubic feet per minute, with effective removal of the contaminant entrained in the released vapor and recirculation of the filtered air.

Alternative injection of heated air in the order of 250°F to 400°F steam or with a solution of hydrogen peroxide vaporized by heated air, or a heated hydrogen peroxide solution by itself, or other chemical oxident, may be employed in implementing the present system. The soil disturbance has been found to activate microbes within the soil, which additionally consume the contaminant, and supplemental nutrients and/or microbes may be added to the injected compressed air or other transient to increase their effectiveness.

## Claims

1. Dynamic air sparging soil remediation system comprising in-situ means for drilling, mixing and agitating soil at a contaminated soil site (34), means (41) for injecting compressed air into the agitated soil at said contaminated soil site, shroud means (35) for collecting released volatile contaminated vapour at the top of said site, and means (37,38) for conducting the volatile contaminant through preferably a HEPA carbon filter system (31) for substantially removing the contaminants.

2. System of claim 1 including a crane (33) supporting means for said drilling and agitating soil.

3. System of claim 2 wherein said crane (33) includes means (32) for mounting said filter system (31) and an air compressor (28) as a substitute in place of conventional counterweight.

4. System of claim 3 wherein said air compressor (28) provides means for pumping air at a rate dependent on project requirements which may be in the order of sixteen hundred cubic feet per minute and/or for pumping air at a pressure in the order of at least one hundred psi and/or weighs in the order of fourteen thousand five hundred pounds.

5. System of claim 2, 3 or 4 wherein said crane (33) is self-propelled.

6. System of any one of claims 2 to 5 including Kelly bar (41) driven drill means for said drilling and agitating soil.

7. System of any one of claims 2 to 6 wherein said drill has a diameter in the order of ten feet or larger.

8. System of any preceding claim wherein said carbon filter system (31) weighs in the order of twenty thousand pounds and/or comprises means capable of filtering up to two thousand cubic feet per minute.

9. System of any preceding claim including means for recirculating compressed air passing through said filter into said site.

10. System of any preceding claim including any one or more of:
means for injecting heated air in the order of 250°F to 400°F, means for injecting a solution of hydrogen peroxide vaporized by heated air, means for injecting a heated hydrogen peroxide solution per se, means for injecting steam, means for injecting ambient air, means for injecting a chemical oxident.

11. System of any preceding claim wherein biomicrobes are added to the injected compressed air.
